(19) Europäisches Patentamt
European Patent Office
Office européen des brevets

(11) EP 2 934 140 B1

(12) **EUROPEAN PATENT SPECIFICATION**

(45) Date of publication and mention of the grant of the patent:
**30.01.2019 Bulletin 2019/05**

(21) Application number: **13866035.2**

(22) Date of filing: **18.12.2013**

(51) Int Cl.:
***A01N 43/40*** *(2006.01)*
***A01P 13/00*** *(2006.01)*
***A01N 41/10*** *(2006.01)*
***A01N 43/56*** *(2006.01)*
***A01N 43/80*** *(2006.01)*

(86) International application number:
**PCT/US2013/076080**

(87) International publication number:
**WO 2014/100154 (26.06.2014 Gazette 2014/26)**

(54) **HERBICIDAL COMPOSITIONS COMPRISING 4-AMINO-3-CHLORO-6-(4-CHLORO-2-FLUORO-3-METHOXYPHENYL) PYRIDINE-2-CARBOXYLIC ACID OR A DERIVATIVE THEREOF AND FLUFENACET**

HERBIZIDZUSAMMENSETZUNGEN MIT 4-AMINO-3-CHLOR-6-(4-CHLOR-2-FLUOR-3-METHOXYPHENYL)PYRIDIN-2-CARBONSÄURE ODER EINEM DERIVAT DAVON UND FLUFENACET

COMPOSITIONS HERBICIDES COMPRENANT DE L'ACIDE 4-AMINO-3-CHLORO-6-(4-CHLORO-2-FLUORO-3-MÉTHOXYPHÉNYL)PYRIDINE-2-CARBOXYLI QUE OU UN DÉRIVÉ DE CELUI-CI ET DU FLUFENACET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2012 US 201261745029 P**

(43) Date of publication of application:
**28.10.2015 Bulletin 2015/44**

(73) Proprietor: **Dow AgroSciences LLC**
**Indianapolis, IN 46268 (US)**

(72) Inventor: **BECKER, Joerg**
**D-83043 Bad Aibling (DE)**

(74) Representative: **f & e patent**
**Fleischer, Engels & Partner mbB, Patentanwälte**
**Braunsberger Feld 29**
**51429 Bergisch Gladbach (DE)**

(56) References cited:
**WO-A1-2011/144685**
**WO-A2-2009/029518**
**US-A1- 2009 062 121**
**US-A1- 2012 015 811**
**US-A1- 2013 310 256**
**US-B1- 6 376 427**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Background

The protection of crops from weeds and other vegetation which inhibit crop growth is a constantly recurring problem in agriculture. To help combat this problem, researchers in the field of synthetic chemistry have produced an extensive variety of chemicals and chemical formulations effective in the control of such unwanted growth. Chemical herbicides of many types have been disclosed in the literature and a large number are in commercial use. However, there remains a need for compositions and methods that are effective in controlling undesirable vegetation.

US 2011/0287932 discloses a three component herbicidal compositions consisting of glufosinate ammonium, methyl 4-amino-3-chloro-6-(4-chloro-2-fluoro-3-methoxyphenyl)-pyridine-2-carboxylate, and flufenacet to control *Setaria viridis* in glufosinate-tolerant wheat (Table 7).

US 2009/0062121 discloses a number of herbicidal compositions consisting of methyl 4-amino-3-chloro-6-(4-chloro-2-fluoro-3-methoxyphenyl)-pyridine-2-carboxylate combined with other herbicidal active ingredients. A specific herbicidal three component composition disclosed therein consists of methyl 4-amino-3-chloro-6-(4-chloro-2-fluoro-3-methoxyphenyl)-pyridine-2-carboxylate, diflufenican, and flufenacet (Tables 2 and 24).

Summary

Provided herein are herbicidal compositions comprising an herbicidally effective amount of a combination of herbicidally active ingredients, the combination comprising: (a) a compound of the formula (I)

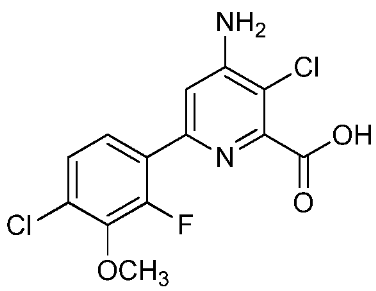

(I)

or an agriculturally acceptable salt or ester of thereof and (b) flufenacet, wherein the weight ratio of (a) to (b) is about 1.25 - 10 of (a) to about 30 - 240 of (b), with the proviso that the composition does not contain glufosinate, L-glufosinate, bialaphos, or diflufenican. The compositions may also contain an agriculturally acceptable adjuvant or carrier.

Provided herein are also methods of controlling undesirable vegetation comprising applying to an area where control is desired (a) about 1.25 to about 10 grams acid equivalent per hectare (g ae/ha) of a compound of formula (I) or an agriculturally acceptable ester or salt thereof and (b) about 30 to about 240 grams active ingredient per hectare (g ai/ha) of flufenacet, with the proviso that no glufosinate, L-glufosinate, bialaphos, or diflufenican is also applied. In some embodiments the combination is applied to the vegetation or the locus thereof. In some embodiments the combination is applied to soil or water to prevent the emergence or growth of the vegetation.

Detailed Description

DEFINITIONS

As used herein, the compound of formula (I) has the following structure:

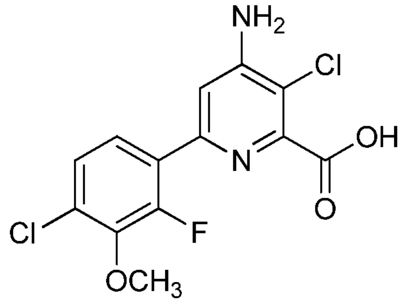

(I)

The compound of formula (I) can be identified by the name 4-amino-3-chloro-6-(4-chloro-2-fluoro-3-methoxyphenyl)-pyridine-2-carboxylic acid and has been described in U.S. Patent 7,314,849 (B2). Exemplary uses of the compound of the formula (I) include controlling undesirable vegetation, including grass, broadleaf and sedge weeds, in multiple non-crop and cropping situations.

As used herein, flufenacet is *N*-(4-fluorophenyl)-*N*-(1-methylethyl)-2-[[5-(trifluoromethyl)-1,3,4-thiadiazol-2-yl]oxy]acetamide. As described in Tomlin, C. D. S., Ed. The Pesticide Manual: A World Compendium, 15th ed.; BCPC: Alton, 2009 (hereafter "The Pesticide Manual, Fifteenth Edition, 2009"), page 522, flufenacet is a systemic herbicide used, for example, post-emergence in maize, wheat, and rice.

As used herein, herbicide means a compound, *i.e.*, active ingredient that kills, controls or otherwise adversely modifies the growth of plants.

As used herein, a herbicidally effective or vegetation controlling amount is an amount of active ingredient which causes an adversely modifying effect to the vegetation *e.g.,* causing deviations from natural development, killing, effecting regulation, causing desiccation, causing retardation, and the like.

As used herein, controlling undesirable vegetation means preventing, reducing, killing, or otherwise adversely modifying the development of plants and vegetation. Described herein are methods of controlling undesirable vegetation through the application of certain herbicide combinations or compositions. Methods of application include, but are not limited to applications to the vegetation or locus thereof, *e.g.,* application to the area adjacent to the vegetation, as well as preemergence, postemergence, foliar, and in-water applications.

As used herein, plants and vegetation include, but are not limited to, germinant seeds, emerging seedlings, plants emerging from vegetative propagules, immature vegetation, and established vegetation.

As used herein, agriculturally acceptable salts and esters refer to salts and esters that exhibit herbicidal activity, or that are or can be converted in plants, water, or soil to the referenced herbicide. Exemplary agriculturally acceptable esters are those that are or can by hydrolyzed, oxidized, metabolized, or otherwise converted, *e.g.,* in plants, water, or soil, to the corresponding carboxylic acid which, depending upon the pH, may be in the dissociated or undissociated form.

Exemplary salts include those derived from alkali or alkaline earth metals and those derived from ammonia and amines. Exemplary cations include sodium, potassium, magnesium, and aminium cations of the formula:

$$R^1R^2R^3R^4N^+$$

wherein $R^1$, $R^2$, $R^3$ and $R^4$ each, independently represents hydrogen or $C_1$-$C_{12}$ alkyl, $C_3$-$C_{12}$ alkenyl or $C_3$-$C_{12}$ alkynyl, each of which is optionally substituted by one or more hydroxy, $C_1$-$C_4$ alkoxy, $C_1$-$C_4$ alkylthio or phenyl groups, provided that $R^1$, $R^2$, $R^3$ and $R^4$ are sterically compatible. Additionally, any two of $R^1$, $R^2$, $R^3$ and $R^4$ together may represent an aliphatic difunctional moiety containing one to twelve carbon atoms and up to two oxygen or sulfur atoms. Salts can be prepared by treatment with a metal hydroxide, such as sodium hydroxide, with an amine, such as ammonia, trimethylamine, diethanolamine, 2-methylthiopropylamine, bisallylamine, 2-butoxyethylamine, morpholine, cyclododecylamine, or benzylamine or with a tetraalkylammonium hydroxide, such as tetramethylammonium hydroxide or choline hydroxide.

Exemplary esters include those derived from $C_1$-$C_{12}$ alkyl, $C_3$-$C_{12}$ alkenyl, $C_3$-$C_{12}$ alkynyl or $C_7$-$C_{10}$ aryl-substituted alkyl alcohols, such as methyl alcohol, isopropyl alcohol, 1-butanol, 2-ethylhexanol, butoxyethanol, methoxypropanol, allyl alcohol, propargyl alcohol, cyclohexanol or unsubstituted or substituted benzyl alcohols. Benzyl alcohols may be substituted with from 1-3 substituents independently selected from halogen, $C_1$-$C_4$ alkyl or $C_1$-$C_4$ alkoxy. Esters can be prepared by coupling of the acids with the alcohol using any number of suitable activating agents such as those used for peptide couplings such as dicyclohexylcarbodiimide (DCC) or carbonyl diimidazole (CDI); by reacting the acids with alkylating agents such as alkylhalides or alkylsulfonates in the presence of a base such as triethylamine or lithium carbonate; by reacting the corresponding acid chloride of an acid with an appropriate alcohol; by reacting the corresponding acid with an appropriate alcohol in the presence of an acid catalyst or by transesterification.

COMPOSITIONS AND METHODS

Provided herein are herbicidal compositions comprising an herbicidally effective amount of a combination of herbicidally active ingredients, the combination comprising: (a) a compound of the formula (I)

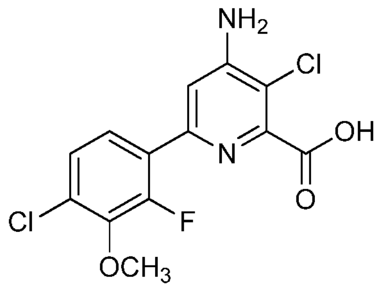

(I)

or an agriculturally acceptable salt or ester of thereof and (b) flufenacet, wherein the weight ratio of (a) to (b) is about 1.25 - 10 of (a) to about 30 - 240 of (b), with the proviso that the composition does not contain glufosinate, L-glufosinate, bialaphos, or diflufenican. In some embodiments the ratio of (a) to (b) is about 2.5 - 10 of (a) to about 60 - 240 of (b).

Also provided are methods of controlling undesirable vegetation comprising applying to an area where control is desired (a) about 1.25 to about 10 g ae/ha of a compound of formula (I) or an agriculturally acceptable ester or salt thereof and (b) about 30 to about 240 g ai/ha of flufenacet, with the proviso that no glufosinate, L-glufosinate, bialaphos, or diflufenican is also applied. Some embodiments comprise applying (a) about 2.5 to about 10 g ae/ha of a compound of formula (I) or an agriculturally acceptable ester or salt thereof and (b) about 60 to about 240 g ai/ha of flufenacet.

Furthermore, some of the combinations described above exhibit synergism, *e.g.,* the herbicidal active ingredients are more effective in combination than when applied individually. Synergism has been defined as "an interaction of two or more factors such that the effect when combined is greater than the predicted effect based on the response of each factor applied separately." Senseman, S., Ed. Herbicide Handbook. 9th ed. Lawrence: Weed Science Society of America, 2007. In certain embodiments, the compositions exhibit synergy as determined by Colby's equation. Colby, S. R. Calculation of the synergistic and antagonistic response of herbicide combinations. Weeds 1967, 15, 20-22.

More specifically, the following equation is used to calculate the expected activity of mixtures containing two herbicical active ingredients:

$$\text{Expected} = A + B - (A \times B/100)$$

A = observed efficacy of a first active ingredient at the same concentration as used in the mixture.

B = observed efficacy of the second active ingredient at the same concentration as used in the mixture.

In certain embodiments of the compositions and methods described herein, the compound of formula (I), *i.e.,* the carboxylic acid, is employed. In certain embodiments, a carboxylate salt, *e.g.* the postassium salt, of the compound of formula (I) is employed. In certain embodiments, an arylalkyl or alkyl ester is employed. In certain embodiments, a benzyl, substituted benzyl, or $C_{1-4}$ alkyl, *e.g., n*-butyl ester is employed. In certain embodiments, the methyl ester or potassium salt is employed.

In some embodiments, the herbicidal active ingredients are formulated in one composition, tank mixed, applied simultaneously, or applied sequentially.

Herbicidal activity is exhibited by the herbicidal compositions when they are applied directly to the plant or to the locus of the plant at any stage of growth. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, the soil type, and the like, as well as the amount of chemical applied. These and other factors can be adjusted to promote non-selective or selective herbicidal action. In some embodiments, the compositions described herein are applied as a post-emergence application, pre-emergence application, or in-water application to flooded paddy rice or water bodies (*e.g.,* ponds, lakes and streams), to relatively immature undesirable vegetation to achieve the maximum control of weeds.

In some embodiments, the compositions and methods provided herein are utilized to control weeds in crops,

*e.g.* cereal crops, including but not limited to rice, wheat, triticale, barley, oats, and rye, and in pastures, grasslands, rangelands, fallowland, industrial vegetation management and rights-of-way.

In certain embodiments, the compositions and methods provided herein are utilized to control weeds in rice. In certain embodiments, the rice is direct-seeded, water-seeded, or transplanted rice.

The compositions and methods described herein may be used to control undesirable vegetation on glyphosate-tolerant-, glufosinate-tolerant-, dicamba-tolerant-, phenoxy auxin-tolerant-, pyridyloxy auxin-tolerant-, aryloxyphenoxypropionate-tolerant-, acetyl CoA carboxylase (ACCase) inhibitor-tolerant-, imidazolinone-tolerant-, acetolactate synthase (ALS) inhibitor-tolerant-, 4-hydroxyphenyl-pyruvate dioxygenase (HPPD) inhibitor -tolerant-, protoporphyrinogen oxidase (PPO) inhibitor -tolerant-, triazine-tolerant-, bromoxynil-tolerant- crops for example, in conjunction with glyphosate, dicamba, phenoxy auxins, pyridyloxy auxins, aryloxyphenoxypropionates, ACCase inhibitors, imidazolinones, ALS inhibitors, HPPD inhibitors, PPO inhibitors, triazines, and bromoxynil. The compositions and methods may be used in controlling undesirable vegetation in crops possessing multiple or stacked traits conferring tolerance to multiple chemistries and/or inhibitors of multiple modes-of-action. In some embodiments, the compound of formula (I) or salt or ester thereof and complementary herbicide or salt or ester thereof are used in combination with herbicides that are selective for the crop being treated and which complement the spectrum of weeds controlled by these compounds at the application rate employed. In some embodiments, the compositions described herein and other complementary herbicides are applied at the same time, either as a combination formulation or as a tank mix.

The compositions and methods provided herein are utilized to control undesirable vegetation. Undesirable vegetation includes, but is not limited to, undesirable vegetation that occurs in rice, cereals, range and pasture, and non-crop settings, (*e.g.,* rights-of-way, industrial vegetation management (IVM)).

In some embodiments, the methods provided herein are utilized to control undesirable vegetation in cereals. In certain embodiments, the undesirable vegetation is *Alopecurus myosuroides* Huds. (blackgrass, ALOMY), *Apera spica-venti* (L.) Beauv. (windgrass, APESV), *Avena fatua* L. (wild oat, AVEFA), *Bromus tectorum* L. (downy brome, BROTE), *Lolium multiflorum* Lam. (Italian ryegrass, LOLMU), *Lolium rigidum* (rigid ryegrass), *Lolium multiflorum subsp. Gaudini* (annual ryegrass), *Phalaris minor* Retz. (littleseed canarygrass, PHAMI), *Poa annua* L. (annual bluegrass, POANN), *Setaria pumila* (Poir.) Roemer & J.A. Schultes (yellow foxtail, SETLU), *Setaria viridis* (L.) Beauv. (green foxtail, SETVI), *Amaranthus retroflexus* (redroot pigweed, AMARE), *Centaurea cyanus* (cornflower, CENCY), *Chenopodium album* (common lambsquarters, CHEAL), *Cirsium arvense* (L.) Scop. (Canada thistle, CIRAR), *Galium aparine* L. (catchweed bedstraw, GALAP), *Fumaria officinalis* (common fumitory, FUMOF), *Kochia scoparia* (L.) Schrad. (kochia, KCHSC), *Lamium purpureum* L. (purple deadnettle, LAMPU), *Matricaria recutita* L. (wild chamomile, MATCH), *Matricaria inodora* (scentless mayweed, MATIN), *Matricaria matricarioides* (Less.) Porter (pineappleweed, MATMT), *Papaver rhoeas* L. (common poppy, PAPRH), *Polygonum convolvulus* L. (wild buckwheat, POLCO), *Salsola tragus* L. (Russian thistle, SASKR), *Sinapis arvensis* (wild mustard, SINAR), *Stellaria media* (L.) Vill. (common chickweed, STEME), *Veronica hederifolia* (Ivy-leaved speedwell, VERHE), *Veronica persica* Poir. (Persian speedwell, VERPE), *Viola arvensis* Murr. (field violet, VIOAR), or *Viola tricolor* L. (wild violet, VIOTR).

In some embodiments, the methods provided herein are utilized to control undesirable vegetation in rice. In certain embodiments, the undesirable vegetation is *Brachiaria platyphylla* (Groseb.) Nash (broadleaf signalgrass, BRAPP), *Digitaria sanguinalis* (L.) Scop. (large crabgrass, DIGSA), *Echinochloa crus-galli* (L.) P. Beauv. (barnyardgrass, ECHCG), *Echinochloa colonum* (L.) LINK (junglerice, ECHCO), *Echinochloa oryzoides* (Ard.) Fritsch (early watergrass, ECHOR), *Echinochloa oryzicola* (Vasinger) Vasinger (late watergrass, ECHPH), *Ischaemum rugosum* Salisb. (saramollagrass, ISCRU), *Leptochloa chinensis* (L.) Nees (Chinese sprangletop, LEFCH), *Leptochloa fascicularis* (Lam.) Gray (bearded sprangletop, LEFFA), *Leptochloa panicoides* (Presl.) Hitchc. (Amazon sprangletop, LEFPA), *Panicum dichotomiflorum* (L.) Michx. (fall panicum, PANDI), *Paspalum dilatatum* Poir. (dallisgrass, PASDI), *Cyperus difformis* L. (smallflower flatsedge, CYPDI), *Cyperus esculentus* L. (yellow nutsedge, CYPES), *Cyperus iria* L. (rice flatsedge, CYPIR), *Cyperus rotundus* L. (purple nutsedge, CYPRO), *Eleocharis* species (ELOSS), *Fimbristylis miliacea* (L.) Vahl (globe fringerush, FIMMI), *Schoenoplectus juncoides* Roxb. (Japanese bulrush, SPCJU), *Schoenoplectus maritimus* L. (sea clubrush, SCPMA), *Schoenoplectus mucronatus* L. (ricefield bulrush, SCPMU), *Aeschynomene* species, (jointvetch, AESSS), *Alternanthera philoxeroides* (Mart.) Griseb. (alligatorweed, ALRPH), *Alisma plantago-aquatica* L. (common waterplantain, ALSPA), *Amaranthus* species, (pigweeds and amaranths, AMASS), *Ammannia coccinea* Rottb. (redstem, AMMCO), *Eclipta alba* (L.) Hassk. (American false daisy, ECLAL), *Heteranthera limosa* (SW.) Willd./Vahl (ducksalad, HETLI), *Heteranthera reniformis* R. & P. (roundleaf mudplantain, HETRE), *Ipomoea hederacea* (L.) Jacq. (ivyleaf morningglory, IPOHE), *Lindernia dubia* (L.) Pennell (low false pimpernel, LIDDU), *Monochoria korsakowii* Regel & Maack (monochoria, MOOKA), *Monochoria vaginalis* (Burm. F.) C. Presl ex Kuhth, (monochoria, MOOVA), *Murdannia nudiflora* (L.) Brenan (doveweed, MUDNU), *Polygonum pensylvanicum* L., (Pennsylvania smartweed, POLPY), *Polygonum persicaria* L. (ladysthumb, POLPE), *Polygonum hydropiperoides* Michx. (mild smartweed, POLHP), *Rotala indica* (Willd.) Koehne (Indian toothcup, ROTIN), *Sagittaria* species, (arrowhead, SAGSS), *Sesbania exaltata* (Raf.) Cory/Rydb. Ex Hill (hemp sesbania, SEBEX), or *Sphenoclea zeylanica* Gaertn. (gooseweed, SPDZE).

In some embodiments, the methods provided herein are utilized to control undesirable vegetation in range and

pasture. In certain embodiments, the undesirable vegetation is *Ambrosia artemisiifolia* L. (common ragweed, AMBEL), *Cassia obtusifolia* (sickle pod, CASOB), *Centaurea maculosa* auct. non Lam. (spotted knapweed, CENMA), *Cirsium arvense* (L.) Scop. (Canada thistle, CIRAR), *Convolvulus arvensis* L. (field bindweed, CONAR), *Euphorbia esula* L. (leafy spurge, EPHES), *Lactuca serriola* L./Torn. (prickly lettuce, LACSE), *Plantago lanceolata* L. (buckhorn plantain, PLALA), *Rumex obtusifolius* L. (broadleaf dock, RUMOB), *Sida spinosa* L. (prickly sida, SIDSP), *Sinapis arvensis* L. (wild mustard, SINAR), *Sonchus arvensis* L. (perennial sowthistle, SONAR), *Solidago* species (goldenrod, SOOSS), *Taraxacum officinale* G.H. Weber ex Wiggers (common dandelion, TAROF), *Trifolium repens* L. (white clover, TRFRE), or *Urtica dioica* L. (common nettle, URTDI).

In some embodiments, the methods provided herein are utilized to control undesirable vegetation found in row crops. In certain embodiments, the undesirable vegetation is *Alopecurus myosuroides* Huds. (blackgrass, ALOMY), *Avenafatua* L. (wild oat, AVEFA), *Brachiaria platyphylla* (Groseb.) Nash (broadleaf signalgrass, BRAPP), *Digitaria sanguinalis* (L.) Scop. (large crabgrass, DIGSA), *Echinochloa crus-galli* (L.) P. Beauv. (barnyardgrass, ECHCG), *Echinochloa colonum* (L.) Link (junglerice, ECHCO), *Lolium multiflorum* Lam. (Italian ryegrass, LOLMU), *Panicum dichotomiflorum* Michx. (fall panicum, PANDI), *Panicum miliaceum* L. (wild-proso millet, PANMI), *Setariafaberi* Herrm. (giant foxtail, SETFA), *Setaria viridis* (L.) Beauv. (green foxtail, SETVI), *Sorghum halepense* (L.) Pers. (Johnsongrass, SORHA), *Sorghum bicolor* (L.) Moench ssp. *Arundinaceum* (shattercane, SORVU), *Cyperus esculentus* L. (yellow nutsedge, CYPES), *Cyperus rotundus* L. (purple nutsedge, CYPRO), *Abutilon theophrasti* Medik. (velvetleaf, ABUTH), *Amaranthus* species (pigweeds and amaranths, AMASS), *Ambrosia artemisiifolia* L. (common ragweed, AMBEL), *Ambrosia psilostachya* DC. (western ragweed, AMBPS), *Ambrosia trifida* L. (giant ragweed, AMBTR), *Asclepias syriaca* L. (common milkweed, ASCSY), *Chenopodium album* L. (common lambsquarters, CHEAL), *Cirsium arvense* (L.) Scop. (Canada thistle, CIRAR), *Commelina benghalensis* L. (tropical spiderwort, COMBE), *Datura stramonium* L. (jimsonweed, DATST), *Daucus carota* L. (wild carrot, DAUCA), *Euphorbia heterophylla* L. (wild poinsettia, EPHHL), *Erigeron bonariensis* L. (hairy fleabane, ERIBO), *Erigeron canadensis* L. (Canadian fleabane, ERICA), *Helianthus annuus* L. (common sunflower, HELAN), *Jacquemontia tamnifolia* (L.) Griseb. (smallflower morningglory, IAQTA), *Ipomoea hederacea* (L.) Jacq. (ivyleaf morningglory, IPOHE), *Ipomoea lacunosa* L. (white morningglory, IPOLA), *Lactuca serriola* L./Torn. (prickly lettuce, LACSE), *Portulaca oleracea* L. (common purslane, POROL), *Sida spinosa* L. (prickly sida, SIDSP), *Sinapis arvensis* L. (wild mustard, SINAR), *Solanum ptychanthum* Dunal (eastern black nightshade, SOLPT), or *Xanthium strumarium* L. (common cocklebur, XANST).

In some embodiements, the compositions and methods provided herein are utilized to control undesirable vegetation including, for example, *Ipomoea, Setaria, Abutilon, Euphorbia, Amaranthus, Cyperus, Chenopodium, Viola, Stellaria,* and/ or *Cirsium.*

In certain embodiments, the methods and compositions provided herein are used to control *Ipomoea* hederacea (ivyleaf morning glory, IPOHE), *Setaria faberi* Herrm. (giant foxtail, SETFA), *Abutilon theophrasti* Medik.(velvetleaf, ABUTH), *Euphorbia heterophylla* L. (wild poinsettia, EPHHL), *Amaranthus retroflexus* L. (AMARE), *Cyperus esculentus* L.(yellow nutsedge, CYPES), *Chenopodium album* L.(common lambsquarters, CHEAL), *Viola tricolor* L.(wild violet, VIOTR), *Stellaria media* (L.) Vill. (common chickweed, STEME), and/ or *Cirsium arvense* (L.) Scop. (Canada thistle, CIRAR).

The compounds of formula I or agriculturally acceptable salt or ester thereof may be used to control herbicide resistant or tolerant weeds. The methods employing the combination of a compound of formula I or agriculturally acceptable salt or ester thereof and the compositions described herein may also be employed to control herbicide resistant or tolerant weeds. Exemplary resistant or tolerant weeds include, but are not limited to, biotypes resistant or tolerant to acetolactate synthase (ALS) inhibitors, photosystem II inhibitors, acetyl CoA carboxylase (ACCase) inhibitors, synthetic auxins, photosystem I inhibitors, 5-enolpyruvylshikimate-3-phosphate (EPSP) synthase inhibitors, microtubule assembly inhibitors, lipid synthesis inhibitors, protoporphyrinogen oxidase (PPO) inhibitors, carotenoid biosynthesis inhibitors, very long chain fatty acid (VLCFA) inhibitors, phytoene desaturase (PDS) inhibitors, glutamine synthetase inhibitors, 4-hydroxyphenyl-pyruvate-dioxygenase (HPPD) inhibitors, mitosis inhibitors, cellulose biosynthesis inhibitors, herbicides with multiple modes-of-action such as quinclorac, and unclassified herbicides such as arylaminopropionic acids, difenzoquat, endothall, and organoarsenicals. Exemplary resistant or tolerant weeds include, but are not limited to, biotypes with resistance or tolerance to multiple herbicides, multiple chemical classes, and multiple herbicide modes-of-action.

In certain embodiments of the compositions and methods described herein, the combination of herbicidally active ingredients consists of (a) the compound of formula (I) or salt or ester threof and (b) flufenacet and the two components are used in amounts such that the weight ratio of (a) the compound of formula (I) or salt or ester thereof to (b) flufenacet is from about 1.25- 10 of (a) to about 30 - 240 of (b). As used herein, the weight ratio of the compound of formula (I) or salt or ester thereof to flufenacet, in cases where a salt or ester of the compound of formula (I) is used, refers to the ratio of the acid equivalent weight of said salt or ester to the weight of flufenacet. In certain embodiments, the weight ratio of (a) the compound of formula (I) or salt or ester thereof to (b) flufenacet is from about 2.5 - 10 of (a) to about 60 - 240 of (b). In one embodiment, the composition comprises (a) the methyl ester of the compound of formula (I) and (b) flufenacet, wherein the weight ratio of the two components is from about 2.5 - 10 of (a) to about 60 -240 of

(b). In one embodiment, the composition comprises (a) the methyl ester of the compound of formula (I) and (b) flufenacet, wherein the weight ratio is 1:3 to 1:100. In one embodiment, the composition comprises (a) the methyl ester of the compound of formula (I) and (b) flufenacet, wherein the weight ratio is 1:6 to 1:48. In one embodiment, the composition comprises (a) the methyl ester of the compound of formula (I) and (b) flufenacet, wherein the weight ratio is 1:3 to 1:100.

With respect to the methods, in certain embodiments, the methods comprise contacting the undesirable vegetation or locus thereof with the herbicidally active components or applying the components to the soil or water to prevent the emergence or growth of vegetation a composition described herein. In some embodiments, the composition is applied at an application rate from about 30 grams active ingredient per hectare (g ai/ha) to about 500 g ai/ha based on the total amount of herbicidal active ingredients in the composition. In certain embodiments, the composition is applied at an application rate from about 60 g ai/ha to about 200 g ai/ha based on the total amount of active ingredients in the composition.

In some embodiments, flufenacet is applied at a rate from about 30 g ai/ha to about 240 g ai/ha and the compound of formula (I) or salt or ester thereof is applied at a rate from about 1.25 grams acid equivalent per hectare (g ae/ha) to about 10 g ae/ha. In some embodiments, flufenacet is applied at a rate from about 60 g ai/ha to about 240 g ai/ha and the compound of formula (I) or salt or ester thereof is applied at a rate from about 2.5 g ae/ha to about 10 g ae/ha. In certain embodiments, the methods utilize the compound of formula (I), or its methyl ester and flufenacet. In one embodiment, the methods utilize the methyl ester of the compound of formula (I) and flufenacet, wherein the methyl ester of the compound of formula (I) is applied at a rate from about 2.5 g ae/ha to about 10 g ae/ha, and flufenacet is applied at a rate from about 60 g ai/ha to about 240 g ai/ha.

In some embodiments of the methods described herein, the active ingredients are applied simultaneously, including, *e.g.,* in the form of a composition. In some embodiments, the active ingredients are applied sequentially, *e.g.,* within 5, 10, 15, or 30 minutes of each other; 1, 2, 3, 4, 5, 10, 12, 24, 48 hour(s) or each other, or 1 week of each other.

The components of the mixtures described herein can be applied either separately or as part of a multipart herbicidal system.

The mixtures described herein can be applied in conjunction with one or more other herbicides to control a wider variety of undesirable vegetation. When used in conjunction with other herbicides, the composition can be formulated with the other herbicide or herbicides, tank mixed with the other herbicide or herbicides or applied sequentially with the other herbicide or herbicides. Some of the herbicides that can be employed in conjunction with the compositions and methods described herein include, but are not limited to: 4-CPA, 4-CPB, 4-CPP, 2,4-D, 2,4-D choline salt, 2,4-D esters and amines, 2,4-DB, 3,4-DA, 3,4-DB, 2,4-DEB, 2,4-DEP, 3,4-DP, 2,3,6-TBA, 2,4,5-T, 2,4,5-TB, acetochlor, acifluorfen, aclonifen, acrolein, alachlor, allidochlor, alloxydim, allyl alcohol, alorac, ametridione, ametryn, amibuzin, amicarbazone, amidosulfuron, aminocyclopyrachlor, aminopyralid, amiprofos-methyl, amitrole, ammonium sulfamate, anilofos, anisuron, asulam, atraton, atrazine, azafenidin, azimsulfuron, aziprotryne, barban, BCPC, beflubutamid, benazolin, bencarbazone, benfluralin, benfuresate, bensulfuron-methyl, bensulide, benthiocarb, bentazon-sodium, benzadox, benzfendizone, benzipram, benzobicyclon, benzofenap, benzofluor, benzoylprop, benzthiazuron, bicyclopyrone, bifenox, bispyribac-sodium, borax, bromacil, bromobonil, bromobutide, bromofenoxim, bromoxynil, brompyrazon, butachlor, butafenacil, butamifos, butenachlor, buthidazole, buthiuron, butralin, butroxydim, buturon, butylate, cacodylic acid, cafenstrole, calcium chlorate, calcium cyanamide, cambendichlor, carbasulam, carbetamide, carboxazole, chlorprocarb, carfentrazone-ethyl, CDEA, CEPC, chlomethoxyfen, chloramben, chloranocryl, chlorazifop, chlorazine, chlorbromuron, chlorbufam, chloreturon, chlorfenac, chlorfenprop, chlorflurazole, chlorflurenol, chloridazon, chlorimuron, chlornitrofen, chloropon, chlorotoluron, chloroxuron, chloroxynil, chlorpropham, chlorsulfuron, chlorthal, chlorthiamid, cinidon-ethyl, cinmethylin, cinosulfuron, cisanilide, clethodim, cliodinate, clodinafop-propargyl, clofop, clomazone, clomeprop, cloprop, cloproxydim, clopyralid, cloransulam-methyl, CMA, copper sulfate, CPMF, CPPC, credazine, cresol, cumyluron, cyanatryn, cyanazine, cycloate, cyclopyrimorate, cyclosulfamuron, cycloxydim, cycluron, cyhalofop-butyl, cyperquat, cyprazine, cyprazole, cypromid, daimuron, dalapon, dazomet, delachlor, desmedipham, desmetryn, di-allate, dicamba, dichlobenil, dichloralurea, dichlormate, dichlorprop, dichlorprop-P, diclofop-methyl, diclosulam, diethamquat, diethatyl, difenopenten, difenoxuron, difenzoquat, diflufenzopyr, dimefuron, dimepiperate, dimethachlor, dimethametryn, dimethenamid, dimethenamid-P, dimexano, dimidazon, dinitramine, dinofenate, dinoprop, dinosam, dinoseb, dinoterb, diphenamid, dipropetryn, diquat, disul, dithiopyr, diuron, DMPA, DNOC, DSMA, EBEP, eglinazine, endothal, epronaz, EPTC, erbon, esprocarb, ethalfluralin, ethbenzamide, ethametsulfuron, ethidimuron, ethiolate, ethobenzamid, etobenzamid, ethofumesate, ethoxyfen, ethoxysulfuron, etinofen, etnipromid, etobenzanid, EXD, fenasulam, fenoprop, fenoxaprop, fenoxaprop-P-ethyl, fenoxaprop-P-ethyl + isoxadifen-ethyl, fenoxasulfone, fenquinotrione, fenteracol, fenthiaprop, fentrazamide, fenuron, ferrous sulfate, flamprop, flamprop-M, flazasulfuron, florasulam, fluazifop, fluazifop-P-butyl, fluazolate, flucarbazone, flucetosulfuron, fluchloralin, flufenican, flufenpyr-ethyl, flumetsulam, flumezin, flumiclorac-pentyl, flumioxazin, flumipropyn, fluometuron, fluorodifen, fluoroglycofen, fluoromidine, fluoronitrofen, fluothiuron, flupoxam, flupropacil, flupropanate, flupyrsulfuron, fluridone, flurochloridone, fluroxypyr, flurtamone, fluthiacet, fomesafen, foramsulfuron, fosamine, fumiclorac, furyloxyfen, glyphosate salts and esters, halosafen, halosulfuron-methyl, haloxydine, haloxyfop-methyl, haloxyfop-P-methyl, hexachloroacetone, hexaflurate, hexazinone, imazamethabenz, imazamox, imazapic, imazapyr, imazaquin, imazethapyr, imazosulfuron, indanofan, indaziflam, iodobonil, iodomethane, iodosulfuron, iodosulfuron-ethyl-sodium, iofensulfuron, ioxynil, ipazine, ipfencarbazone, iprymidam, isocarbamid, isocil, isomethiozin, isonoruron, isopolinate, isopropalin, isoproturon, isouron, isoxaben, isoxachlortole, isoxaflutole, isoxapyrifop, karbutilate, ketospiradox, lactofen, lenacil, linuron, MAA, MAMA, MCPA esters and amines, MCPA-thioethyl, MCPB, mecoprop, mecoprop-P, medinoterb, mefenacet, mefluidide, mesoprazine, mesosulfuron, mesotrione, metam, metamifop, metamitron, metazachlor, metazosulfuron, metflurazon, methabenzthiazuron, methalpropalin, methazole, methiobencarb, methiozolin, methiuron, methometon, methoprotryne, methyl bromide, methyl isothiocyanate, methyldymron, metobenzuron, metobromuron, metolachlor, metoxuron, metribuzin, metsulfuron, metsulfuron-methyl, molinate, monalide, monisouron, monochloroacetic acid, monolinuron, monuron, morfamquat, MSMA, naproanilide, napropamide, napropamide-M, naptalam, neburon, nicosulfuron, nipyraclofen, nitralin, nitrofen, nitrofluorfen, norflurazon, noruron, OCH, orbencarb, *ortho*-dichlorobenzene, orthosulfamuron, oryzalin, oxadiargyl, oxadiazon, oxapyrazon, oxasulfuron, oxaziclomefone, oxyfluorfen, paraflufen-ethyl, parafluron, paraquat, pebulate, pelargonic acid, pendimethalin, penoxsulam, pentachlorophenol, pentanochlor, pentoxazone, perfluidone, pethoxamid, phenisopham, phenmedipham, phenmedipham-ethyl, phenobenzuron, phenylmercury acetate, picloram, picolinafen, pinoxaden, piperophos, potassium arsenite, potassium azide, potassium cyanate, pretilachlor, primisulfuron-methyl, procyazine, prodiamine, profluazol, profluralin, profoxydim, proglinazine, prohexadione-calcium, prometon, prometryn, pronamide, propachlor, propanil, propaquizafop, propazine, propham, propisochlor, propoxycarbazone, propyrisulfuron, propyzamide, prosulfalin, prosulfocarb, prosulfuron, proxan, prynachlor, pydanon, pyraclonil, pyraflufen-ethyl, pyrasulfotole, pyrazogyl, pyrazolynate, pyrazosulfuron-ethyl, pyrazoxyfen, pyribenzoxim, pyributicarb, pyriclor, pyridafol, pyridate, pyriftalid, pyriminobac, pyrimisulfan, pyrithiobac-sodium, pyroxasulfone, pyroxsulam, quinclorac, quinmerac, quinoclamine, quinonamid, quizalofop, quizalofop-P-ethyl, rhodethanil, rimsulfuron, saflufenacil, S-metolachlor, sebuthylazine, secbumeton, sethoxydim, siduron, simazine, simeton, simetryn, SMA, sodium arsenite, sodium azide, sodium chlorate, sulcotrione, sulfallate, sulfentrazone, sulfometuron, sulfosate, sulfosulfuron, sulfuric acid, sulglycapin, swep, TCA, tebutam, tebuthiuron, tefuryltrione, tembotrione, tepraloxydim, terbacil, terbucarb, terbuchlor, terbumeton, terbuthylazine, terbutryn, tetrafluron, thenylchlor, thiazafluron, thiazopyr, thidiazimin, thidiazuron, thiencarbazone-methyl, thifensulfuron, thifensulfuron-methyl, thiobencarb, tiafenacil, tiocarbazil, tioclorim, topramezone, tralkoxydim, triafamone, tri-allate, triasulfuron, triaziflam, tribenuron, tribenuron-methyl, tricamba, triclopyr choline salt, triclopyr esters and salts, tridiphane, trietazine, trifloxysulfuron, trifluralin, triflusulfuron, trifop, trifopsime, trihydroxytriazine, trimeturon, tripropindan, tritac, tritosulfuron, vernolate, xylachlor, benzyl 4-amino-3-chloro-5-fluoro-6-(4-chloro-2-fluoro-3-methoxyphenyl)pyridine-2-carboxylate and salts, esters and salts, esters, optically active isomers and mixtures thereof.

In some embodiments, the compositions described herein are employed in combination with one or more herbicide safeners, such as AD-67 (MON 4660), benoxacor, benthiocarb, brassinolide, cloquintocet (acid or mexyl), cyometrinil, daimuron, dichlormid, dicyclonon, dimepiperate, disulfoton, fenchlorazole-ethyl, fenclorim, flurazole, fluxofenim, furilazole, harpin proteins, isoxadifen-ethyl, jiecaowan, jiecaoxi, mefenpyr-diethyl, mephenate, naphthalic anhydride (NA), oxabetrinil, R29148, 1-[4-(*N*-(2-methoxybenzoyl)sulfamoyl)phenyl]-3-methylurea, *N*-(2-methoxybenzoyl)-4-[(methylaminocarbonyl)amino]benzenesulfonamide and *N*-phenyl-sulfonylbenzoic acid amides, to enhance their selectivity. In some embodiments, the safeners are employed in rice, cereal, corn, or maize settings. In some embodiments, the safener is cloquintocet (e.g., cloquintocet acid) or an ester or salt thereof. In certain embodiments, cloquintocet is utilized to antagonize harmful effects of the compositions on rice and cereals. In some embodiments, the safener is cloquintocet (mexyl).

In some embodiments, compositions provided herein further comprise at least one agriculturally acceptable adjuvant or carrier. Suitable adjuvants or carriers should not be phytotoxic to valuable crops, particularly at the concentrations employed in applying the compositions for selective weed control in the presence of crops, and should not react chemically with herbicidal components or other composition ingredients. Such mixtures can be designed for application directly to weeds or their locus or can be concentrates or formulations that are normally diluted with additional carriers and adjuvants before application. They can be solids, such as, for example, dusts, granules, water-dispersible granules, or wettable powders, or liquids, such as, for example, emulsifiable concentrates, solutions, emulsions or suspensions. They can also be provided as a pre-mix or tank mixed.

Suitable agricultural adjuvants and carriers include, but are not limited to, crop oil concentrate; nonylphenol ethoxylate; benzylcocoalkyldimethyl quaternary ammonium salt; blend of petroleum hydrocarbon, alkyl esters, organic acid, and anionic surfactant; $C_9$-$C_{11}$ alkylpolyglycoside; phosphated alcohol ethoxylate; natural primary alcohol ($C_{12}$-$C_{16}$) ethoxylate; di-*sec*-butylphenol EO-PO block copolymer; polysiloxane-methyl cap; nonylphenol ethoxylate + urea ammonium nitrate; emulsified methylated seed oil; tridecyl alcohol (synthetic) ethoxylate (8EO); tallow amine ethoxylate (15 EO); PEG(400) dioleate-99.

Liquid carriers that can be employed include water and organic solvents. The organic solvents include, but are not limited to, petroleum fractions or hydrocarbons such as mineral oil, aromatic solvents, paraffinic oils, and the like; vegetable oils such as soybean oil, rapeseed oil, olive oil, castor oil, sunflower seed oil, coconut oil, corn oil, cottonseed oil, linseed oil, palm oil, peanut oil, safflower oil, sesame oil, tung oil and the like; esters of the above vegetable oils;

esters of monoalcohols or dihydric, trihydric, or other lower polyalcohols (4-6 hydroxy containing), such as 2-ethyl hexyl stearate, *n*-butyl oleate, isopropyl myristate, propylene glycol dioleate, di-octyl succinate, di-butyl adipate, di-octyl phthalate and the like; esters of mono, di and polycarboxylic acids and the like. Specific organic solvents include, but are not limited to toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methyl alcohol, ethyl alcohol, isopropyl alcohol, amyl alcohol, ethylene glycol, propylene glycol, glycerine, *N*-methyl-2-pyrrolidinone, *N,N*-dimethyl alkylamides, dimethyl sulfoxide, liquid fertilizers and the like. In certain embodiments, water is the carrier for the dilution of concentrates.

Suitable solid carriers include but are not limited to talc, pyrophyllite clay, silica, attapulgus clay, kaolin clay, kieselguhr, chalk, diatomaceous earth, lime, calcium carbonate, bentonite clay, Fuller's earth, cottonseed hulls, wheat flour, soybean flour, pumice, wood flour, walnut shell flour, lignin, cellulose, and the like.

In some embodiments, the compositions described herein further comprise one or more surface-active agents. In some embodiments, such surface-active agents are employed in both solid and liquid compositions, and in certain embodiments those designed to be diluted with carrier before application. The surface-active agents can be anionic, cationic or nonionic in character and can be employed as emulsifying agents, wetting agents, suspending agents, or for other purposes. Surfactants which may also be used in the present formulations are described, *inter alia*, in "McCutcheon's Detergents and Emulsifiers Annual," MC Publishing Corp., Ridgewood, New Jersey, 1998 and in "Encyclopedia of Surfactants," Vol. I-III, Chemical Publishing Co., New York, 1980-81. Surface-active agents include, but are not limited to salts of alkyl sulfates, such as diethanolammonium lauryl sulfate; alkylarylsulfonate salts, such as calcium dodecylbenzenesulfonate; alkylphenolalkylene oxide addition products, such as nonylphenol-$C_{18}$ ethoxylate; alcohol-alkylene oxide addition products, such as tridecyl alcohol-$C_{16}$ ethoxylate; soaps, such as sodium stearate; alkylnaphthalenesulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; salts of mono and dialkyl phosphate esters; vegetable or seed oils such as soybean oil, rapeseed/canola oil, olive oil, castor oil, sunflower seed oil, coconut oil, corn oil, cottonseed oil, linseed oil, palm oil, peanut oil, safflower oil, sesame oil, tung oil and the like; and esters of the above vegetable oils, and in certain embodiments, methyl esters.

In some embodiments, these materials, such as vegetable or seed oils and their esters, can be used interchangeably as an agricultural adjuvant, as a liquid carrier or as a surface active agent.

Other exemplary additives for use in the compositions provided herein include but are not limited to compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions may also contain other compatible components, for example, other herbicides, plant growth regulants, fungicides, insecticides, and the like and can be formulated with liquid fertilizers or solid, particulate fertilizer carriers such as ammonium nitrate, urea and the like.

In some embodiments, the concentration of the active ingredients in the compositions described herein is from about 0.0005 to 98 percent by weight. In some embodiments, the concentration is from about 0.0006 to 90 percent by weight. In compositions designed to be employed as concentrates, the active ingredients, in certain embodiments, are present in a concentration from about 0.1 to 98 weight percent, and in certain embodiments about 0.5 to 90 weight percent. Such compositions are, in certain embodiments, diluted with an inert carrier, such as water, before application. The diluted compositions usually applied to weeds or the locus of weeds contain, in certain embodiments, about 0.0003 to 1.5 weight percent active ingredient and in certain embodiments contain about 0.0008 to 1.0 weight percent.

The present compositions can be applied to weeds or their locus by the use of conventional ground or aerial dusters, sprayers, and granule applicators, by addition to irrigation or paddy water, and by other conventional means known to those skilled in the art.

The described embodiments and following examples are for illustrative purposes.

EXAMPLE 1

Results in Tables 1-2 are greenhouse trial results for foliar-applied compositions. The compositions tested, application rates employed, plant species tested, and results are given in Tables 1 - 2.

The following abbreviations are used in Tables 1 - 2:

| | | |
|---|---|---|
| TRZAS | *Triticum aestivum* (spring) | spring wheat |
| IPOHE | *Ipomoea hederacea* | ivy- leaf morning glory |
| SETFA | *Setaria faberi* Herrm. | giant foxtail |

(continued)

| | | |
|---|---|---|
| ABUTH | *Abutilon theophrasti* Medik. | velvetleaf |
| EPHHL | *Euphorbia heterophylla* L. | wild poinsettia |
| AMARE | *Amaranthus retroflexus* L. | redroot pigweed |
| CYPES | *Cyperus esculentus* L. | yellow nutsedge |
| CHEAL | *Chenpodium album* L. | common lambsquarters |
| VIOTR | *Viola tricolor* L. | wild violet |
| STEME | *Stellaria media* (L.) Vill. | common chickweed |
| CIRAR | *Cirsium arvense* (L.) Scop. | Canada thistle |

g /ha = grams acid equivalent per hectare (g ae/ha) for Cmpd 1 and grams active ingredient per hectare (g ai/ha) for flufenacet.

Obs = observed value

Exp = expected value as calculated by the equations set forth above in paragraph [0019]. Cmpd 1 = methyl 4-amino-3-chloro-6-(4-chloro-2-fluoro-3-methoxyphenyl)-pyridine-2-carboxylate

Table 1: Synergistic activity of Cmpd 1 plus flufenacet

| Application Rate (g/ha) | | TRZAS | | | IPOHE | | | SETFA | | | ABUTH | | |
|---|---|---|---|---|---|---|---|---|---|---|---|---|---|
| Cmpd 1 | Flufenacet | Obs | Exp | Δ | Obs | Exp | Δ | Obs | Exp | Δ | Obs | Exp | Δ |
| 1.25 | | 0 | - | | 15 | - | | 0 | - | | 78 | - | |
| 0 | 30 | 0 | - | | 0 | - | | 0 | - | | 0 | - | |
| 0 | 60 | 0 | - | | 0 | - | | 0 | - | | 0 | - | |
| 1.25 | 30 | 0 | 0 | 0 | 20 | 15 | 5 | 0 | 0 | 0 | 90 | 78 | 13 |
| 1.25 | 60 | 0 | 0 | 0 | 25 | 15 | 10 | 0 | 0 | 0 | 94 | 78 | 17 |
| 2.5 | | 0 | - | | 15 | - | | 5 | - | | 91 | - | |
| 2.5 | 30 | 0 | 0 | 0 | 15 | 15 | 0 | 0 | 5 | -5 | 95 | 91 | 4 |
| 2.5 | 60 | 0 | 0 | 0 | 20 | 15 | 5 | 0 | 5 | -5 | 100 | 91 | 9 |
| 5 | | 0 | - | | 35 | - | | 0 | - | | 98 | - | |
| 5 | 30 | 0 | 0 | 0 | 20 | 35 | -15 | 5 | 0 | 5 | 93 | 98 | -5 |
| 5 | 60 | 0 | 0 | 0 | 25 | 35 | -10 | 63 | 0 | 63 | 90 | 98 | -8 |
| 70516-WO-PCT | | | | | | | | | | | | | |

Table 2: Synergistic activity of Cmpd 1 plus flufenacet

| Application Rate (g/ha) | | EPHHL | | | AMARE | | | CYPES | | | CHEAL | | | VIOTR | | | STEME | | | CIRAR | | |
|---|---|---|---|---|---|---|---|---|---|---|---|---|---|---|---|---|---|---|---|---|---|---|
| Cmpd 1 | Flufenacet | Obs | Exp | Δ | Obs | Exp | Δ | Obs | Exp | Δ | Obs | Exp | Δ | Obs | Exp | Δ | Obs | Exp | Δ | Obs | Exp | Δ |
| 1.25 | | 60 | - | | 30 | - | | 58 | - | | 60 | - | | 5 | - | | 20 | - | | 20 | - | |
| 0 | 30 | 0 | - | | 0 | 0 - | | 0 | - | | 0 | - | | 0 | - | | 0 | - | | 0 | - | |
| 0 | 60 | 0 | - | | 0 | 0 - | | 0 | - | | 0 | - | | 0 | - | | 0 | - | | 0 | - | |
| 1.25 | 30 | 80 | 60 | 20 | 80 | 30 | 50 | 75 | 58 | 18 | 90 | 60 | 30 | 35 | 5 | 30 | 73 | 20 | 53 | 60 | 20 | 40 |
| 1.25 | 60 | 80 | 60 | 20 | 79 | 30 | 49 | 78 | 58 | 20 | 94 | 60 | 34 | 30 | 5 | 25 | 60 | 20 | 40 | 63 | 20 | 43 |
| 2.5 | | 89 | - | | 93 | - | | 85 | - | | 83 | - | | 15 | - | | 58 | - | | 55 | - | |
| 2.5 | 30 | 90 | 89 | 1 | 85 | 93 | -8 | 83 | 85 | -3 | 90 | 83 | 8 | 75 | 15 | 60 | 73 | 58 | 15 | 80 | 55 | 25 |
| 2.5 | 60 | 93 | 89 | 4 | 78 | 93 | -15 | 90 | 85 | 5 | 94 | 83 | 11 | 73 | 15 | 58 | 70 | 58 | 13 | 83 | 55 | 28 |
| 5 | | 92 | - | | 78 | - | | 81 | - | | 85 | - | | 23 | - | | 65 | - | | 75 | - | |
| 5 | 30 | 88 | 92 | -4 | 80 | 78 | 3 | 85 | 81 | 4 | 89 | 85 | 4 | 60 | 23 | 38 | 60 | 65 | -5 | 84 | 75 | 9 |
| 5 | 60 | 90 | 92 | -2 | 85 | 78 | 8 | 95 | 81 | 14 | 99 | 85 | 14 | 65 | 23 | 43 | 68 | 65 | 3 | 82 | 75 | 7 |

EXAMPLE 2

Field trials were conducted in which post-emergence application of 7.5 g ae/ha of methyl 4-amino-3-chloro-6-(4-chloro-2-fluoro-3-methoxyphenyl)-pyridine-2-carboxylate (Cmpd 1) and 240 g ai/ha of flufenacet as a tank-mix demonstrated synergistic control of field violet (*Viola arvensis,* VIOAR) in winter wheat (*Triticum aestivum,* TRZAW). The materials were applied early post-emergence. % BIOMASS CONTROL was visually rated. Results are presented in Table 3.

Table 3: Synergistic activity of Cmpd 1 plus flufenacet against field violet in winter wheat

| | | % BIOMASS CONTROL | | | | | |
|---|---|---|---|---|---|---|---|
| Application rate (g/ha) | | 39 DAA | | 181 DAA | | 225 DAA | |
| Cmpd 1 | flufenacet | Obs | Exp | Obs | Exp | Obs | Exp |
| 7.5 | | 13.33d | | 23.33f | | 18.33f | |
| | 240 | 10.00d | | 15.00g | | 10.00g | |
| 7.5 | 240 | 51.67c | 22.0 | 71.00e | 34.8 | 63.33e | 26.5 |

DAA = days after application
g /ha = grams acid equivalent per hectare (g ae/ha) for Cmpd 1 and grams active ingredient per hectare (g ai/ha) for flufenacet.
Obs = observed value
Exp = expected value.

**Claims**

1. A synergistic composition comprising an herbicidally effective amount of a combination of herbicidally active ingredients, the combination comprising: (a) a compound of the formula (I)

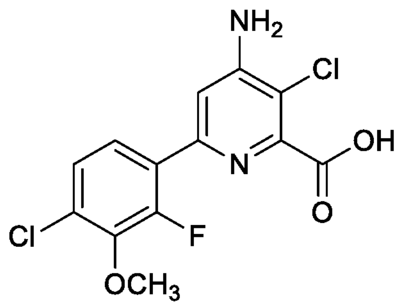

(I)

or an agriculturally acceptable salt or a $C_{1-4}$ alkyl or benzyl ester of thereof and (b) flufenacet, wherein the weight ratio of (a) to (b) is 1.25 - 10 of (a) to 30 - 240 of (b), with the proviso that the composition does not contain glufosinate, L-glufosinate, bialaphos, or diflufenican.

2. The composition of claim 1 comprising an herbicidally effective amount of a combination of herbicidally active ingredients, the combination consisting of: (a) a compound of the formula (I)

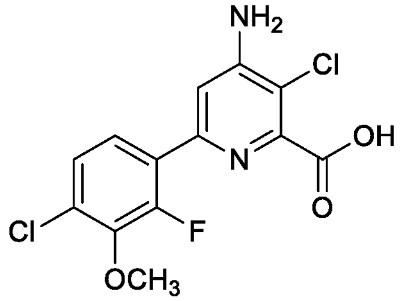

(I)

or an agriculturally acceptable salt or a $C_{1-4}$ alkyl or benzyl ester of thereof and (b) flufenacet, wherein the weight ratio of (a) to (b) is 1.25 - 10 of (a) to 30 - 240 of (b).

**3.** The composition of claim 1 or 2 wherein the weight ratio of (a) to (b) is 2.5 - 10 of (a) to 60 - 240 of (b).

**4.** The composition of any one of claims 1-3 wherein (a) is a potassium salt of compound of formula (I).

**5.** The composition of any one of claims 1-3 wherein (a) is a methyl ester of the compound of formula (I).

**6.** The composition of any of claims 1-5, further comprising a herbicide safener and/or an agriculturally acceptable adjuvant or carrier.

**7.** A method of controlling undesirable vegetation which comprises applying to an area where control is desired a herbicidally effective amount of the composition of any one of claims 1-6.

**8.** A method of controlling undesirable vegetation comprising applying to an area where control is desired (a) 1.25 to 10 g ae/ha of a compound of formula (I)

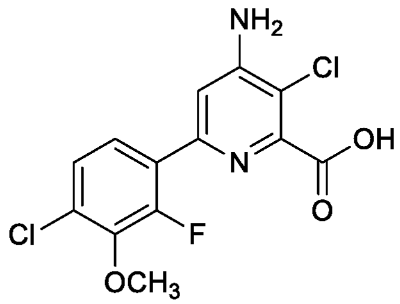

(I)

or an agriculturally acceptable salt or a $C_{1-4}$ alkyl or benzyl ester thereof and (b) 30 to 240 g ai/ha of flufenacet in form of a synergistic combination, with the proviso that no glufosinate, L-glufosinate, bialaphos, or diflufenican is also applied.

**9.** The method of claim 8 wherein (a) is 2.5 to 10 g ae/ha of a compound of formula (I) or an agriculturally acceptable salt or ester thereof, and (b) is 60 to 240 g ai/ha of flufenacet.

**10.** The method of claims 8 or 9 wherein the undesirable vegetation is controlled in rice, wheat, barley, triticale, oats, rye, corn, maize, cereals, pastures, grasslands, rangelands, fallowland, industrial vegetation management or rights-of-way.

**11.** The method of claims 8 or 9, wherein the undesirable vegetation is immature.

**12.** The method of claims 8 or 9 wherein the herbicidally active components are applied pre-emergently or post-emergently.

13. The method of any one of claims 8-12, wherein the undesirable vegetation is controlled in glyphosate-, glufosinate-, dicamba-, phenoxy auxins-, pyridyloxy auxins-, aryloxyphenoxypropionates-, acetyl CoA carboxylase (ACCase) inhibitors-, imidazolinones-, acetolactate synthase (ALS) inhibitors-, 4-hydroxyphenyl-pyruvate dioxygenase (HPPD) inhibitors-, protoporphyrinogen oxidase (PPO) inhibitors-, triazines-, or bromoxynil-tolerant crop.

14. The method of any one of claims 8-13, wherein the undesirable vegetation is *Ipomoea, Setaria,* Abutilon, *Euphorbia, Amaranthus, Cyperus, Chenopodium, Viola, Stellaria,* and/ or *Cirsium.*

15. The method of claim 14, wherein the undesirable vegetation is *Ipomoea hederacea* (IPOHE), *Setaria faberi* Herrm. (SETFA), *Abutilon theophrasti* Medik. (ABUTH), *Euphorbia heterophylla* L. (EPHHL), *Amaranthus retroflexus* L. (AMARE), *Cyperus esculentus* L. (CYPES), *Chenopodium album* L. (CHEAL), *Viola tricolor* L. (VIOTR), *Stellaria media* (L.) Vill. (STEME), or *Cirsium arvense* (L.) Scop. (CIRAR).

## Patentansprüche

1. Eine synergistische Zusammensetzung umfassend eine herbizid wirksame Menge einer Kombination von herbiziden Wirkstoffen, wobei die Kombination umfasst: (a) eine Verbindung der Formel (I)

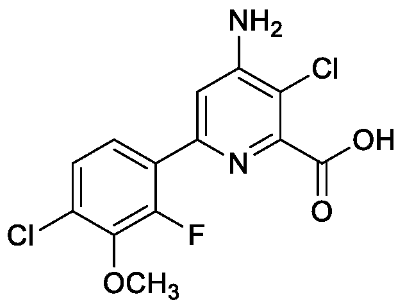

(I)

oder ein landwirtschaftlich akzeptables Salz oder einen $C_1$-$C_4$-Alkyl- oder Benzylester davon und (b) Flufenacet, wobei das Gewichtsverhältnis von (a) zu (b) 1,25-10 an (a) zu 30-240 an (b) beträgt, mit der Maßgabe, dass die Zusammensetzung nicht Glufosinat, L-Glufosinat, Bialaphos oder Diflufenican enthält.

2. Die Zusammensetzung gemäß Anspruch 1 umfassend eine herbizid wirksame Menge einer Kombination von herbiziden Wirkstoffen, die Kombination bestehend aus: (a) einer Verbindung der Formel (I)

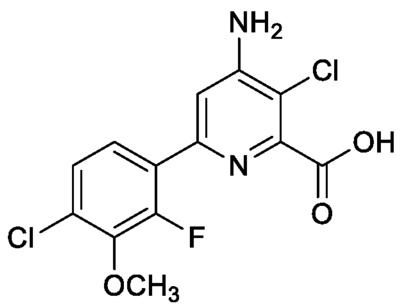

(I)

oder einem landwirtschaftlich akzeptablen Salz oder einem $C_1$-$C_4$-Alkyl- oder Benzylester davon und (b) Flufenacet, wobei das Gewichtsverhältnis von (a) zu (b) 1,25-10 an (a) zu 30-240 an (b) beträgt.

3. Die Zusammensetzung gemäß Anspruch 1 oder 2, wobei das Gewichtsverhältnis von (a) zu (b) 2,5-10 an (a) bis 60-240 (b) beträgt.

4. Die Zusammensetzung gemäß einem der Ansprüche 1 bis 3, wobei (a) ein Kaliumsalz der Verbindung der Formel (I) ist.

**5.** Die Zusammensetzung gemäß einem der Ansprüche 1 bis 3, wobei (a) ein Methylester der Verbindung der Formel (I) ist.

**6.** Die Zusammensetzung gemäß einem der Ansprüche 1 bis 5, des Weiteren umfassend einen Herbizidsafener und/oder einen landwirtschaftlich akzeptablen Hilfs- oder Trägerstoff.

**7.** Ein Verfahren zur Bekämpfung unerwünschter Vegetation, welches das Anwenden einer herbizid wirksamen Menge der Zusammensetzung gemäß einem der Ansprüche 1 bis 6 auf eine Fläche, auf welcher Bekämpfung erwünscht ist, umfasst.

**8.** Ein Verfahren zur Bekämpfung unerwünschter Vegetation umfassend das Anwenden von (a) 1,25 bis 10 g ae/ha einer Verbindung der Formel (I)

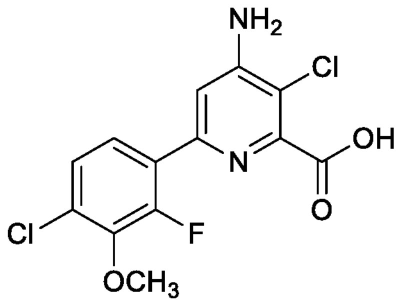

(I)

oder eines landwirtschaftlich akzeptablen Salzes oder eines $C_1$-$C_4$-Alkyl- oder Benzylesters davon und (b) 30 bis 240 g ai/ha an Flufenacet in Form einer synergistischen Kombination auf eine Fläche, auf der Bekämpfung gewünscht ist, mit der Maßgabe, dass kein Glufosinat, L-Glufosinat, Bialaphos oder Diflufenican ebenfalls angewandt wird.

**9.** Das Verfahren gemäß Anspruch 8, wobei (a) 2,5 bis 10 g ae/ha einer Verbindung der Formel (I) oder eines landwirtschaftlich akzeptablen Salzes oder Esters davon ist und (b) 60 bis 240 g ai/ha an Flufenacet ist.

**10.** Das Verfahren gemäß den Ansprüchen 8 oder 9, wobei die unerwünschte Vegetation in Reis, Weizen, Gerste, Tritikale, Hafer, Roggen, Mais, Welschkorn, Getreide, Weiden, Grasland, Weideland, Brachland, im industriellen Vegetationsmanagement oder entlang von Verkehrswegen bekämpft wird.

**11.** Das Verfahren gemäß den Ansprüchen 8 oder 9, wobei die unerwünschte Vegetation unreif ist.

**12.** Das Verfahren gemäß den Ansprüchen 8 oder 9, wobei die herbiziden Wirkstoffe im Vorlauf oder im Nachlauf angewandt werden.

**13.** Das Verfahren gemäß einem der Ansprüche 8 bis 12, wobei die unerwünschte Vegetation in einer Nutzpflanze bekämpft wird, die tolerant gegenüber Glyphosat, Glufosinat, Dicamba, Phenoxyauxin, Pyridyloxyauxin, Aryloxyphenoxypropionat, Acetyl-CoA-Carboxylase-(ACCase)-Inhibitoren, Imidazolinonen, Acetolactatsynthase-(ALS)-Inhibitoren, 4-Hydroxyphenylpyruvatdioxygenase-(HPPD)-Inhibitoren, Protoporphyrinogenoxidase-(PPO)-Inhibitoren, Triazin oder Bromoxynil ist.

**14.** Das Verfahren gemäß einem der Ansprüche 8 bis 13, wobei die unerwünschte Vegetation *Ipomoea, Setaria, Abutilon, Euphorbia, Amaranthus, Cyperus, Chenopodium, Viola, Stellaria* und/ oder *Cirsium* ist.

**15.** Das Verfahren gemäß Anspruch 14, wobei die unerwünschte Vegetation *Ipomoea hederacea* (IPOHE), *Setaria faberi* Herrm. (SETFA), *Abutilon theophrasti* Medik. (ABUTH), *Euphorbia heterophylla* L. (EPHHL), *Amaranthus retroflexus* L. (AMARE), *Cyperus esculentus* L. (CYPES), *Chenopodium album* L. (CHEAL), *Viola tricolor* L. (VIOTR), *Stellaria media* (L.) Vill. (STEME), oder *Cirsium arvense* (L.) Scop. (CIRAR) ist.

## Revendications

1. Composition synergique comprenant une quantité à effet herbicide d'une association de composants à activité herbicide, l'association comprenant (a) un composé de formule (I)

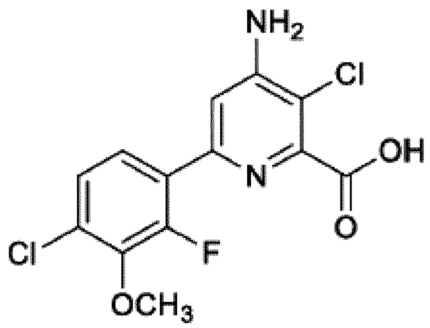

(I)

ou un sel acceptable en agriculture ou un ester alkylique en $C_1$-$C_4$ ou benzylique d'un tel composé et (b) du flufénacet, dans laquelle le rapport pondéral de (a) à (b) vaut 1,25 - 10 de (a) à 30 - 240 de (b), étant entendu que la composition ne contient pas de glufosinate, de L-glufosinate, de bialaphos, ni de diflufénican.

2. Composition selon la revendication 2, comprenant une quantité à effet herbicide d'une association de composants à activité herbicide, l'association consistant en : a) un composé de formule (I)

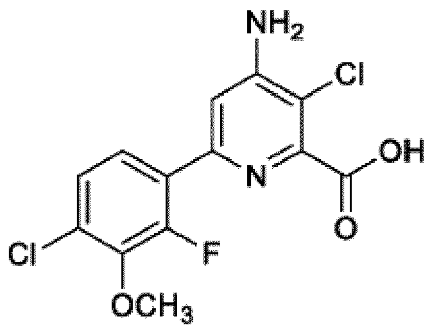

(I)

ou un sel acceptable en agriculture ou un ester alkylique en $C_1$-$C_4$ ou benzylique d'un tel composé et (b) du flufénacet, dans laquelle le rapport pondéral de (a) à (b) vaut 1,25 - 10 de (a) à 30 - 240 de (b).

3. Composition selon la revendication 1 ou 2, dans laquelle le rapport pondéral de (a) à (b) vaut 2,5 - 10 de (a) à 60 - 240 de (b).

4. Composition selon l'une quelconque des revendications 1 à 3, dans laquelle (a) est le sel de potassium du composé de formule (I).

5. Composition selon l'une quelconque des revendications 1 à 3, dans laquelle (a) est l'ester méthylique du composé de formule (I).

6. Composition selon l'une quelconque des revendications 1 à 5, comprenant encore un phytoprotecteur contre les herbicides et/ou un adjuvant ou une substance de support acceptable en agriculture.

7. Procédé de lutte contre une végétation indésirable, qui comprend le fait d'appliquer sur une zone où la lutte est souhaitée une quantité à effet herbicide de la composition selon l'une quelconque des revendications 1 à 6.

8. Procédé de lutte contre une végétation indésirable, qui comprend le fait d'appliquer sur une zone où la lutte est souhaitée (a) 1,25 à 10 g éa/ha d'un composé de formule (I)

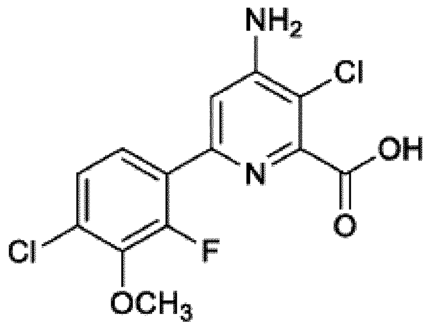

(I)

ou d'un sel acceptable en agriculture ou d'un ester alkylique en $C_1$-$C_4$ ou benzylique d'un tel composé et (b) 30 à 240 g ca/ha de flufénacet sous forme d'une association synergique, étant entendu qu'on n'applique pas aussi du glufosinate, du L-glufosinate, du bialaphos, ou du diflufénican.

**9.** Procédé selon la revendication 8, dans lequel (a) consiste en 2,5 à 10 g éa/ha d'un composé de formule (I) ou d'un sel ou ester acceptable en agriculture d'un tel composé, et (b) consiste en 60 à 240 g ca/ha de flufénacet.

**10.** Procédé selon la revendication 8 ou 9, dans lequel on lutte contre la végétation indésirable dans des cultures de riz, de blé, d'orge, de triticale, d'avoine, de seigle, de maïs, de céréales, des pâturages, des herbages, des prairies, des jachères, des zones d'aménagement végétal intégré ou des voies de passage.

**11.** Procédé selon la revendication 8 ou 9, dans lequel la végétation indésirable est immature.

**12.** Procédé selon la revendication 8 ou 9, dans lequel les composants à activité herbicide sont appliqués en pré-levée ou en post-levée.

**13.** Procédé selon l'une quelconque des revendications 8 à 12, dans lequel on lutte contre la végétation indésirable dans des cultures de plantes tolérantes au glyphosate, au glufosinate, au dicamba, aux auxines de type phénoxy, aux auxines de type pyridyloxy, aux aryloxyphénoxypropionates, aux inhibiteurs d'acétyl-CoA carboxylase (ACCase), aux imidazolinones, aux inhibiteurs d'acétolactate synthase (ALS), aux inhibiteurs de 4-hydroxyphénylpyruvate dioxygénase (HPPD), aux inhibiteurs de protoporphyrinogène oxydase (PPO), aux triazines ou au bromoxynil.

**14.** Procédé selon l'une quelconque des revendications 8 à 13, dans lequel la végétation indésirable est *Ipomoea, Setaria,* l'abutilon, *Euphorbia, Amaranthus, Cyperus, Chenopodium, Viola, Stellaria* et/ou *Cirsium.*

**15.** Procédé selon la revendication 14, dans lequel la végétation indésirable est *Ipomoea hederacea* (IPOHE), *Setaria faberi* Herrm. (SETFA), *Abutilon theophrasti* Medik. (ABUTH), *Euphorbia heterophylla* L. (EPHHL), *Amaranthus retroflexus* L. (AMARE), *Cyperus esculentus* L. (CYPES), *Chenopodium album* L. (CHEAL), *Viola tricolor* L. (VIOTR), *Stellaria media* (L.) Vill. (STEME), ou *Cirsium arvense* (L.) Scop. (CIRAR).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20110287932 A
- US 20090062121 A
- US 7314849 B


### Non-patent literature cited in the description


- The Pesticide Manual: A World Compendium. BCPC, 2009
- The Pesticide Manual. 2009, 522
- an interaction of two or more factors such that the effect when combined is greater than the predicted effect based on the response of each factor applied separately. Herbicide Handbook. Weed Science Society of America, 2007
- **COLBY, S. R.** Calculation of the synergistic and antagonistic response of herbicide combinations. *Weeds,* 1967, vol. 15, 20-22
- McCutcheon's Detergents and Emulsifiers Annual. MC Publishing Corp, 1998
- Encyclopedia of Surfactants. Chemical Publishing Co, 1980, vol. I-III